# EUROPÄISCHE PATENTSCHRIFT

(11) **EP 2 873 069 B1**
(45) Veröffentlichungstag und Bekanntmachung des Hinweises auf die Patenterteilung: **26.05.2021**
(21) Anmeldenummer: 13733285.4
(22) Anmeldetag: 01.07.2013
(51) Int. Cl.: G09G 5/22, G06F 3/147, G01C 21/36

(54) **VERFAHREN ZUM BETREIBEN EINER OPTISCHEN ANZEIGEVORRICHTUNG EINES FAHRZEUGS**
METHOD FOR OPERATING AN OPTICAL DISPLAY DEVICE OF A VEHICLE
PROCÉDÉ DE COMMANDE D'UN DISPOSITIF D'AFFICHAGE OPTIQUE D'UN VÉHICULE

(30) Priorität: 10.07.2012 DE 102012212016
(43) Veröffentlichungstag der Anmeldung: 20.05.2015
(73) Patentinhaber: Bayerische Motoren Werke Aktiengesellschaft, 80809 München (DE)
(72) Erfinder: RIEGER, Wolfgang, 82194 Groebenzell (DE); SCHWAB, Axel, 80538 München (DE)
(86) Internationale Anmeldenummer: PCT/EP2013/063793
(87) Internationale Veröffentlichungsnummer: WO 2014/009190

(56) Entgegenhaltungen:
- WO-A2-2011/015843
- US-A1- 2011 093 190

## Beschreibung

Die Erfindung betrifft ein Verfahren zum Betreiben einer optischen Anzeigevorrichtung sowie eine Datenermittlungseinheit, eine Bildermittlungseinheit sowie ein Anzeigesystem für ein Fahrzeug zur Ausführung des Verfahrens.

Heutige Kraftfahrzeuge weisen verschiedene Steuergeräte auf, die ausgebildet sind, verschiedene Fahrzeugfunktionen auszuführen. Funktionen zur Fahrerinformation werden beispielsweise von einem Kombi-Instrument ausgeführt. Funktionen zur Navigation werden von einem anderen Steuergerät ausgeführt, beispielsweise in einer Head-Unit. Anzeigen zur Navigation und zu den Fahrerinformationen erfolgen überwiegend mittels unterschiedlicher optischer Anzeigeeinrichtungen, die den Steuergeräten direkt zugeordnet sind. Beispielsweise werden die Fahrerinformationen mittels einer Kombi-Instrumententafel und die Navigationsinformationen mittels einem zentralen Fahrzeugdisplay angezeigt.

WO 2011/015843 A2 offenbart ein kontaktanaloges Head-Up-Display (HUD) für Straßenfahrzeuge. Das HUD umfasst ein Symbolbild-Erzeugungssystem zum Erzeugen von Symbolik für das HUD und einen Bildprozessor, der mit dem Symbolbild-Erzeugungssystem, einem Sensorsystem und einem virtuellen Bilderzeugungssystem gekoppelt ist, um Symbolbilddaten zu empfangen und zu verarbeiten und diese in Daten umzuwandeln, die ein 2D-Bild für eine Anzeige abhängig von einer erfassten Straßenposition definieren.

US 2011/0093190 A1 offenbart ein Head-Up-Display (HUD) - Navigationssystem. Das HUD-Navigationssystem umfasst einen Server, ein mobiles Endgerät und ein HUD-Navigationsgerät. Der Server generiert GPS-Routendaten unter Verwendung von Abfahrtspunktdaten, Zieldaten und zuvor gespeicherten Straßeninformationsdaten. Das mobile Endgerät fordert den Server auf, GPS-Routendaten zu generieren, und stellt GPS-Routendaten bereit, die vom Server übertragen werden. Das HUD-Navigationsgerät vergleicht die vom mobilen Endgerät bereitgestellten GPS-Routendaten mit den aktuellen GPS-Positionsdaten, um Navigationsdaten zu erzeugen, und projiziert mindestens ein horizontal gespiegeltes Bild, ein horizontal gespiegeltes Zeichen oder einen horizontal gespiegelten numerischen Wert, der mindestens einem Teil der Navigationsdaten entspricht, auf eine Windschutzscheibe.

Die Aufgabe, die der Erfindung zu Grunde liegt, ist es, ein Verfahren zum Betreiben einer optischen Anzeigevorrichtung sowie eine Datenermittlungseinheit, eine Bildermittlungseinheit und ein Anzeigesystem für ein Fahrzeug zu schaffen, die eine effiziente Bereitstellung der für die Bildgenerierung erforderlichen Daten im Fahrzeug und/oder eine effiziente Bildgenerierung ermöglichen.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich gemäß einem ersten Aspekt aus, durch ein Verfahren zum Betreiben einer optischen Anzeigevorrichtung eines Fahrzeugs. Hierbei wird ein Datensatz ermittelt abhängig von einer vorgegebenen Navigationsinformation, wobei der Datensatz eine vorgegebene Metadatenstruktur aufweist, die ein Feld für eine Fahraktion und ein Feld für eine Distanz aufweist, wobei die Fahraktion und die Distanz textuell beschrieben sind. Der Datensatz wird über eine vorgegebene Kommunikationsschnittstelle übertragen. Abhängig von dem über die Kommunikationsschnittstelle empfangenen Datensatz werden Bildpunktwerte für zumindest einen Teil von Bildpunkten eines digitalen Bildes und/oder eines grafischen Elements ermittelt. Abhängig von vorgegebenen Streckendaten und/oder vorgegebenen Umfelddaten wird ein dreidimensionales Modell für eine vorgegebene Umgebung des Fahrzeugs ermittelt und die Bildpunktwerte für den zumindest einen Teil der Bildpunkte des digitalen Bildes und/oder des grafischen Elements werden abhängig dem dreidimensionalen Modell ermittelt. Ferner wird ein Signalisierungssignal ermittelt zum Signalisieren der Bildpunktwerte der Bildpunkte mittels der optischen Anzeigevorrichtung.

Dies hat den Vorteil, dass Informationen, insbesondere die Navigationsinformationen, für die üblicherweise ein Signalisierungssignal generiert und bereitgestellt wird, das die Information grafisch und/oder bildhaft charakterisiert, umgesetzt werden können in die Datensätze mit der Metadatenstruktur. Dies Datensätze können effizient übertragen werden und dann an anderer Stelle genutzt werden für eine Bildgenerierung. Vorteilhafterweise ermöglicht dies, die Informationen, insbesondere die Navigationsinformationen, effizient zu übertragen. Eine Übertragungsbandbreite kann im Vergleich zu einer Übertragung der Navigationsinformation in Form von Zeichenbefehlen reduziert werden. Dies kann einen Beitrag leisten dazu, dass trotz einer begrenzten Übertragungsbandbreite eine Anzeige der Navigationsinformation qualitativ hochwertig erfolgen kann.

Die Bildgenerierung kann in einer einzigen Verarbeitungseinheit im Fahrzeug erfolgen. Es ist nicht erforderlich, dass an verschiedenen Orten, das heißt in verschiedenen Verarbeitungseinheiten des Fahrzeugs, zum Beispiel in der Head-Unit und in einem Kombi-Instrument, Bilder generiert werden, die dann anschließend in einer der beiden Verarbeitungseinheiten zusammengeführt werden. Es ist ausreichend, dass die für eine Bildsynthese, auch Rendering genannt, erforderlichen Daten nur der einen Verarbeitungseinheit zur Verfügung gestellt werden. Die Bildgenerierung durch die eine Verarbeitungseinheit vereinfacht eine konsistente Bildgenerierung. Insbesondere bei einer aufwendigen dreidimensionalen Darstellung ist es möglich, schlüssige und hochwertige Anzeigeinhalte zu ermitteln. Die Metadatenstruktur der Datensätze ermöglicht, dass die Bildpunktwerte, insbesondere bei der aufwendigen dreidimensionalen Darstellung, einfacher und/oder zuverlässiger und/oder präziser ermittelt werden könne. Die Metadatenstruktur der Datensätze kann einen Beitrag dazu leisten, dass logische Verknüpfungen präziser beschrieben werden können. Bei einer Anzeige mit hohen Echtzeitanforderungen, insbesondere für eine kontaktanaloge Darstellung mit einem Head-up-Display, sind die Leistungsanforderungen an die Verarbeitungseinheit, die die Bildsynthese ausführt, sehr hoch. Die Bildgenerierung in nur der einen Verarbeitungseinheit für ein kontaktanaloges Head-Up-Display entlastet weitere Recheneinheiten, zum Beispiel den Prozessor in der Navigationseinheit, und ermöglicht eine fahrsituationsabhängige Anzeigenpriorisierung aller Inhalte im Head-Up- Display in Echtzeit.

Ferner kann das dreidimensionale Modell sehr präzise und zuverlässig ermittelt werden und somit die Bildpunktwerte derart ermittelt werden, dass eine Anzeige des Bildes und/oder des grafischen Elements mit einer hohen Qualität erfolgen kann.

In einer vorteilhaften Ausgestaltung des ersten Aspekts umfasst die Navigationsinformation eine Fahranweisung für einen Fahrzeugnutzer. Dies hat den Vorteil, dass die Fahranweisung, die einen prädiktiven Charakter aufweist, einfach und zuverlässig in Echtzeit ermittelt und signalisiert werden kann.

In einer vorteilhaften Ausgestaltung des ersten Aspekts umfasst die optische Anzeigevorrichtung ein Head-up- Display mit einem vorgegebenen Anzeigefeld. Die Bildpunktwerte des grafischen Elements werden abhängig von dem Datensatz und dem dreidimensionalen Modell derart und auf dem Anzeigefeld angezeigt, dass das grafische Element von einem Betrachter des Anzeigefelds aus einer vorgegebenen Betrachtungsposition heraus mit einem direkten Bezug zu der realen Umgebung des Fahrzeugs wahrgenommen wird. Eine Einbettung und/oder Überlagerung des grafischen Elements als virtuelle Information in eine von einem Fahrzeugnutzer wahrgenommene reale Umgebung ermöglicht, dass ein prädiktiver Charakter der Information, insbesondere der Fahranweisung, von dem Fahrzeugnutzer einfach, zuverlässig und leicht verständlich wahrgenommen werden kann.

Die Erfindung zeichnet sich gemäß einem zweiten Aspekt aus, durch eine Bildermittlungseinheit, die signaltechnisch koppelbar ist mit einer optischen Anzeigevorrichtung des Fahrzeugs und die ausgebildet ist, einen vorgegebenen Datensatz zu empfangen, der abhängig von einer vorgegebenen Navigationsinformation ermittelt wird und der eine vorgegebene Metadatenstruktur aufweist, die ein Feld für eine Fahraktion und ein Feld für eine Distanz aufweist, wobei die Fahraktion und die Distanz textuell beschrieben sind, und der über eine vorgegebene Kommunikationsschnittstelle übertragen wird. Ferner ist die Bildermittlungseinheit ausgebildet, abhängig von dem empfangenen Datensatz Bildpunktwerte für zumindest einen Teil von Bildpunkten eines digitalen Bildes und/oder eines grafischen Elements zu ermitteln

Ferner ist die Bildermittlungseinheit ausgebildet, abhängig von vorgegebenen Streckendaten und/oder vorgegebenen Umfelddaten ein dreidimensionales Modell für eine vorgegebene Umgebung des Fahrzeugs zu ermitteln und die Bildpunktwerte für den zumindest einen Teil der Bildpunkte des digitalen Bildes und/oder des grafischen Elements abhängig dem dreidimensionalen Modell zu ermitteln. Des Weiteren ist die Bildermittlungseinheit ausgebildet ein Signalisierungssignal zum Signalisieren der Bildpunktwerte der Bildpunkte mittels der optischen Anzeigevorrichtung zu ermitteln.

Es ist ausreichend, dass die für die Bildsynthese erforderlichen Daten, insbesondere die Datensätze, nur der Bildermittlungseinheit zur Verfügung gestellt werden. Die Bildgenerierung durch die Bildermittlungseinheit vereinfacht die konsistente Bildgenerierung. Die Bildgenerierung für ein kontaktanaloges Head-U -Display erfordert aufgrund der hohen Echtzeitanforderung dieser Anzeige eine sehr hohe Rechenleistung. Die Bildermittlungseinheit kann mit einer ausreichend großen Rechenleistung ausgestattet sein, so dass die Bildgenerierung für ein kontaktanaloges Head-Up-Display mit ausreichender Qualität möglich ist.

In einer vorteilhaften Ausgestaltung des zweiten Aspekts umfasst die optische Anzeigevorrichtung ein Head-up- Display mit einem vorgegebenen Anzeigefeld und die Bildermittlungseinheit ist ausgebildet, die Bildpunktwerte des grafischen Elements abhängig von dem Datensatz und dem dreidimensionalen Modell derart zu ermitteln und auf dem vorgegebenen Anzeigefeld des Head-up-Displays zur Anzeige zu bringen, dass das grafische Element von einem Betrachter des Anzeigefelds aus einer vorgegebenen Betrachtungsposition heraus mit einem direkten Bezug zu der realen Umgebung des Fahrzeugs wahrgenommen wird.

Ergänzende vorteilhafte Ausgestaltungen des ersten Aspekts gelten hierbei auch für den zweiten Aspekt.

Die Erfindung zeichnet sich gemäß einem dritten Aspekt aus durch ein Anzeigesystem für ein Fahrzeug, das eine Datenermittlungseinheit aufweist. Die Datenermittlungseinheit ist, ausgebildet, einen Datensatz zu ermitteln abhängig von einer vorgegebenen Navigationsinformation, wobei der Datensatz eine vorgegebene Metadatenstruktur aufweist, die ein Feld für eine Fahraktion und ein Feld für eine Distanz aufweist, wobei die Fahraktion und die Distanz textuell beschrieben sind. Ferner ist die Datenermittlungseinheit ausgebildet, den Datensatz über eine vorgegebene Kommunikationsschnittstelle zu senden. Ferner weist das Anzeigesystem eine Bildermittlungseinheit gemäß dem zweiten Aspekt auf. Des Weiteren umfasst das Anzeigesystem eine vorgegebene Kommunikationsschnittstelle, die die Datenermittlungseinheit und die Bildermittlungseinheit signaltechnisch koppelt, und zumindest eine optische Anzeigevorrichtung, die signaltechnisch gekoppelt ist mit der Bildermittlungseinheit und die ausgebildet ist, das von der Bildermittlungseinheit ermittelte Signalisierungssignal zu empfangen und zu signalisieren.

Vorteilhafterweise ermöglicht die Bereitstellung der Navigationsinformation mittels Datensatzes mit der Metadatenstruktur, dass die Datenermittlungseinheit mit geringerer Rechenleistung ausgestattet sein kann und/oder eine Übertragungsbandbreite der Kommunikationsschnittstelle gering gehalten werden kann.

In einer vorteilhaften Ausgestaltung des dritten Aspekts ist die optische Anzeigevorrichtung signaltechnisch mit der Bildermittlungseinheit über eine vorgegebene Multimedia-Schnittstelle gekoppelt. Dies ermöglicht effiziente und zuverlässige Übertragung des ermittelten Signalisierungssignals.

Ergänzende vorteilhafte Ausgestaltungen des ersten und zweiten Aspekts gelten hierbei auch für den dritten Aspekt.

Ausführungsbeispiele der Erfindung sind im Folgenden anhand der schematischen Zeichnungen erläutert.

Es zeigen:
Figur 1 ein schematisches Blockschaltbild für ein Anzeigesystem eines Fahrzeugs und
Figur 2 ein Head-up-Display für das Fahrzeug.

Elemente gleicher Konstruktion oder Funktion sind figuren-übergreifend mit den gleichen Bezugszeichen versehen.

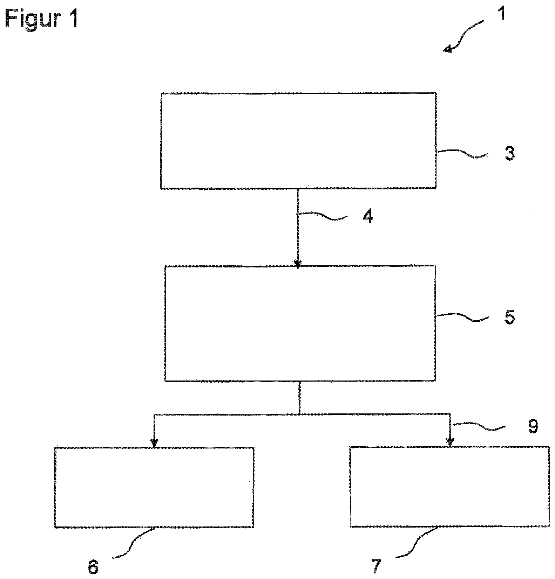

Figur 1 zeigt ein Ausführungsbeispiel eines Anzeigesystems 1 eines Fahrzeugs. Das Anzeigesystem 1 weist eine Datenermittlungseinheit 3 und eine Bildermittlungseinheit 5 auf sowie zumindest eine optische Anzeigevorrichtung auf. In dem in Figur 1 gezeigten Ausführungsbeispiel weist das Anzeigesystem 1 beispielhaft eine erste Anzeigevorrichtung 6 und eine zweite Anzeigevorrichtung 7 auf.

Die erste Anzeigevorrichtung 6 umfasst beispielsweise einen Bildschirm. Der Bildschirm kann beispielsweise als Flüssigkristallanzeige, auch LC-Display genannt, ausgebildet sein. Die erste Anzeigeeinrichtung kann insbesondere in einer Kombi-Instrumententafel des Fahrzeugs angeordnet sein.

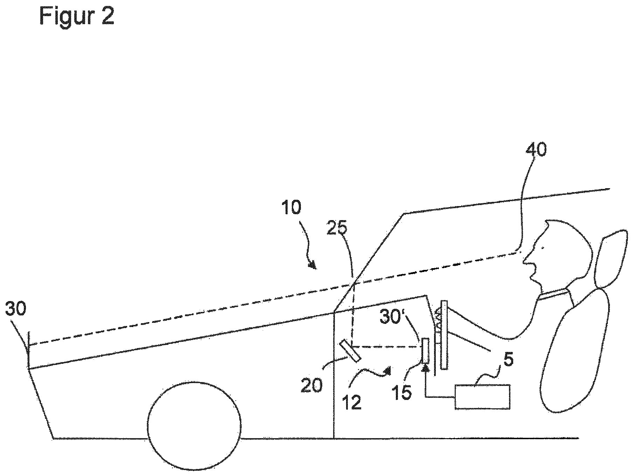

Die zweite Anzeigevorrichtung 7 umfasst beispielsweise ein Head-up-Display 10. Ein Ausführungsbeispiel des Head-up-Displays 10 ist im Detail in Figur 2 gezeigt.

Die in Figur 1 gezeigte Datenermittlungseinheit 3 umfasst beispielsweise eine zentrale Recheneinheit des Fahrzeugs, auch Head-Unit genannt. Die Datenermittlungseinheit 3 kann beispielsweise eine Navigationsvorrichtung umfassen. Die Datenermittlungseinheit 3 ist ausgebildet, einen Datensatz zu ermitteln abhängig von einer vorgegebenen Navigationsinformation, wobei der Datensatz eine vorgegebene Metadatenstruktur aufweist, die geeignet ist, die Navigationsinformation textuell zu charakterisieren. Ferner ist die Datenermittlungseinheit 3 ausgebildet, den Datensatz über eine vorgegebene Kommunikationsschnittstelle 4 zu senden.

Die Navigationsinformation kann hierbei beispielsweise jegliche Art von Information umfassen, die geeignet ist, einen Fahrzeugführer beim Steuern des Fahrzeugs zu unterstützen.

Die Datenermittlungseinheit 3 ist beispielsweise ausgebildet, abhängig von einer ermittelten und/oder empfangenen aktuellen Position des Fahrzeugs und digitaler Kartendaten sowie abhängig von einem gewünschten Zielort und/oder einer ermittelten Route eine Fahranweisung zu ermitteln. Abhängig von der ermittelten Fahranweisung ermittelt die Datenermittlungseinheit 3 den Datensatz mit der vorgegebenen Metastruktur, wobei der Datensatz die ermittelte Fahranweisung textuell charakterisiert. Die Daten der Navigation werden somit nicht in Form von Zeichenbefehlen oder als Picture-in-Picture-Inhalte, sondern in Form von Metadaten zur Verfügung gestellt. Beispielsweise wird also nicht ein Zeichenbefehl oder ein Videobild für einen Abbiegepfeil übertragen, sondern lediglich die Eigenschaftsinformationen einer Fahranweisung. Dies kann beispielsweise in der folgenden textuellen vorgegebenen Metadatenstruktur erfolgen:
<Aktion>; <Richtungselement>; <Distanz>
beispielsweise
   - "Abbiegen nach rechts in 200m"
   - "Wechseln auf die rechte Fahrspur in 300 m"

Zusätzlich oder alternativ ist es möglich, die Beschreibung mittels einer Kodierung abzukürzen. Zum Beispiel können folgende Beschreibungselemente genutzt werden:

### Beispiel 1:

Name: Typ Richtungselement
Beschreibung: Einfacher Typ eines Fahrmanövers

### Mögliche Werte:

| | |
|---|---|
| 1 | Geradeaus |
| 2 | Halblinks |
| 3 | Halbrechts |
| 4 | Scharf links |
| 5 | Scharfrechts |
| 6 | Links |
| 7 | Rechts |
| 8 | Wenden links |
| 9 | Wenden rechts |
| ... | |

### Beispiel 2:

Name: Typ Abzweigungselement
Beschreibung: Typ der Abzweigung

### Mögliche Werte:

| | |
|---|---|
| 1 | Gabelung (2 Straßen) |
| 2 | Gabelung (3 Straßen) |
| 3 | Ausfahrt |
| ... | |

### Beispiel 3:

Name: Geokoordinaten
Beschreibung: Definiert eine geographische Position.

| Attributname | Mögliche Werte | Einheit |
|---|---|---|
| Breitengrad | 8-Byte Gleitkommazahl | Grad |
| Längengrad | 8-Byte Gleitkommazahl | Grad |
| Höhe | 2-Byte Integer | m |

Die Bildermittlungseinheit 5 ist über die Kommunikationsschnittstelle 4 signaltechnisch gekoppelt mit der Datenermittlungseinheit 3 und ausgebildet, den von der Datenermittlungseinheit 3 gesendeten Datensatz zu empfangen, der über die vorgegebene Kommunikationsschnittstelle 4 übertragen wird.

Die Kommunikationsschnittstelle 4 kann eine Netzwerkverbindung umfassen und/oder eine Leitungsverbindung des Fahrzeugs. Die Kommunikationsschnittstelle 4 kann unidirektional oder bidirektional ausgebildet sein. Die Datenermittlungseinheit 3 und die Bildermittlungseinheit 5 können in verschiedenen Rechenvorrichtungen angeordnet sein oder zum Beispiel einen gemeinsamen Prozessor nutzen.

Die Bildermittlungseinheit 5 ist signaltechnisch gekoppelt mit der ersten 6 und der zweiten Anzeigevorrichtung 7.
Die Bildermittlungseinheit 5 ist ausgebildet, abhängig von dem empfangenen Datensatz Bildpunktwerte für zumindest einen Teil von Bildpunkten eines digitalen Bildes und/oder eines grafischen Elements zu ermitteln und ein Signalisierungssignal zu ermitteln zum Signalisieren der Bildpunktwerte der Bildpunkte mittels der optischen Anzeigevorrichtung.

Die Bildermittlungseinheit 5 ist beispielsweise ausgebildet, abhängig von vorgegebenen Streckendaten und/oder vorgegebenen Umfelddaten ein dreidimensionales Modell für eine vorgegebene Umgebung des Fahrzeugs zu ermitteln. Ferner ist die Bildermittlungseinheit 5 ausgebildet, die Bildpunktwerte für den zumindest einen Teil der Bildpunkte des digitalen Bildes und/oder des grafischen Elements abhängig dem dreidimensionalen Modell zu ermitteln.

Die Streckendaten und/oder Umfelddaten können beispielsweise von einer weiteren Fahrzeugeinrichtung und/oder der Datenermittlungseinheit 3 und/oder von der Bildermittlungseinheit 5 bereitgestellt werden. Beispielsweise kann die Bildermittlungseinheit 5 ausgebildet sein, abhängig von den erfassten Umfelddaten Umfeldmodelldaten zu ermitteln, die eine vorgegebene Umgebung des Fahrzeugs repräsentieren. Die Bildermittlungseinheit 5 ist beispielsweise mit einer oder mehreren Sensoreinheiten signaltechnisch gekoppelt. Die jeweiligen Sensoreinheiten sind ausgebildet, Umfelddaten des Fahrzeugs zu erfassen. Die jeweilige Sensoreinheit kann eine optische Erfassungseinrichtung aufweisen, zum Beispiel eine Videokamera, und/oder einen Radarsensor und/oder einen Ultraschallsensor und/oder ein Lidarsensor. Die Streckendaten können beispielsweise von der Navigationsvorrichtung bereitgestellt werden.

Alternativ oder zusätzlich können die Streckendaten und/oder Umfelddaten in Form von Datensätzen, die die Metadatenstruktur aufweisen, für die Bildermittlungseinheit 5 bereitgestellt werden, zum Beispiel durch die Datenermittlungseinheit 3.

Das von der Bildermittlungseinheit 5 ermittelte Signalisierungssignal wird beispielsweise an die erste 6 und/oder an die zweite Anzeigevorrichtung 7 gesendet.

Die Bildermittlungseinheit 5 ist signaltechnisch mit der zu mindest einen optischen Anzeigevorrichtung signaltechnisch gekoppelt. Die Bildermittlungseinheit 5 ist beispielsweise über eine vorgegebene Multimedia-Schnittstelle 9 gekoppelt mit der ersten 6 und/oder der zweiten Anzeigevorrichtung 7. Die Multimedia-Schnittstelle 9 kann beispielsweise ein High Definition Multimedia Interface umfassen.

Figur 2 zeigt ein Ausführungsbeispiel eines Head-up-Displays 10.

Das Head-up-Display 10 umfasst eine Bilderzeugungseinrichtung 12 zur Erzeugung eines virtuellen Bildes 30. Die Bilderzeugungseinrichtung 12 umfasst ein Display 15 zur Erzeugung eines realen Bildes 30' und ein optisches System zur Erzeugung des virtuellen Bildes 30. Das optische System umfasst einen abbildenden ersten 20 und zweiten Spiegel 25. Ein von dem Display 15 erzeugtes reales Bild 30' wird zunächst auf den ersten Spiegel 20 gelenkt und von dem ersten Spiegel 20 auf den zweiten Spiegel 25 projiziert. Der zweite Spiegel 25 kann als eine Windschutzscheibe eines Fahrzeugs 1 ausgebildet sein.

Aus einer vorgegebenen Eyebox 40 eines Fahrers erscheint in einem Abstand vor der Windschutzscheibe, beispielsweise am Ende der Motorhaube, das virtuelle Bild 30. Das virtuelle Bild 30 kann im Allgemeinen nur aus einem definierten Bereich, der so genannten Eyebox 40, gesehen werden. Die Eyebox 40 wird üblicherweise so ausgelegt, dass aus dem gesamten gewünschten Eyeboxbereich das komplette virtuelle Bild 30 gesehen werden kann.

In dem virtuellen Bild 30 können statische Anzeigeinhalte, die dauerhaft oder häufig angezeigt werden, dargestellt werden. Des Weiteren kann die Bilderzeugungseinrichtung 12 dazu ausgebildet sein, dass in dem virtuellen Bild 30 Bildinhalte angezeigt werden, die nur situativ und kurzzeitig angezeigt werden. Das Head-up-Display 10 kann insbesondere als kontaktanaloges Head-up-Display 10 ausgebildet sein. Bei Head-up-Displays 10 wird zwischen kontaktanaloger und nichtkontaktanaloger Darstellung unterschieden. Kontaktanaloge Darstellungsformen reichern die vom Fahrer wahrgenommene Umwelt durch Überlagerung einer künstlich erzeugten Szenerie an. Nichtkontaktanaloge Darstellungsformen stellen dagegen Informationen ohne direkten Bezug zur Umwelt dar.

Die Bilderermittlungseinheit ist beispielsweise ausgebildet, die Bildpunktwerte des grafischen Elements abhängig von dem Datensatz und dem dreidimensionalen Modell derart zu ermitteln und auf dem vorgegebenen Anzeigefeld des Head-up-Displays 10 zur Anzeige zu bringen, dass das grafische Element von einem Betrachter des Anzeigefelds aus einer vorgegebenen Betrachtungsposition heraus mit einem direkten Bezug zu der realen Umgebung des Fahrzeugs wahrgenommen wird.

### Bezugszeichenliste

- 1: Anzeigesystem
- 3: Datenermittlungseinheit
- 4: Kommunikationsschnittstelle
- 5: Bildermittlungseinheit
- 6: erste Anzeigevorrichtung
- 7: zweite Anzeigevorrichtung
- 9: Multimedia-Schnittstelle
- 10: Head-up-Display
- 12: Bilderzeugungseinrichtung
- 15: Display
- 20: erster Spiegel
- 25: zweiter Spiegel
- 30: virtuelles Bild
- 30': reales Bild
- 40: Eyebox

## Patentansprüche

1. Verfahren zum Betreiben einer optischen Anzeigevorrichtung eines Fahrzeugs, bei dem
- ein Datensatz ermittelt wird abhängig von einer vorgegebenen Navigationsinformation, wobei der Datensatz eine vorgegebene Metadatenstruktur aufweist, die ein Feld für eine Fahraktion und ein Feld für eine Distanz aufweist, wobei die Fahraktion und die Distanz textuell beschrieben sind,
- der Datensatz über eine vorgegebene Kommunikationsschnittstelle (4) übertragen wird,
- abhängig von dem über die Kommunikationsschnittstelle (4) empfangenen Datensatz Bildpunktwerte für zumindest einen Teil von Bildpunkten eines digitalen Bildes und/oder eines grafischen Elements ermittelt werden,
- ein Signalisierungssignal ermittelt wird zum Signalisieren der Bildpunktwerte der Bildpunkte mittels der optischen Anzeigevorrichtung, und **gekennzeichnet durch**:
- abhängig von vorgegebenen Streckendaten und/oder vorgegebenen Umfelddaten ein dreidimensionales Modell für eine vorgegebene Umgebung des Fahrzeugs ermittelt wird,
- die Bildpunktwerte für den zumindest einen Teil der Bildpunkte des digitalen Bildes und/oder des grafischen Elements abhängig dem dreidimensionalen Modell ermittelt werden.

2. Verfahren nach Anspruch 1,
bei dem die Navigationsinformation eine Fahranweisung für einen Fahrzeugnutzer umfasst.

3. Verfahren nach Anspruch 1 oder 2, bei dem
- die optische Anzeigevorrichtung ein Head-up-Display (10) mit einem vorgegebenen Anzeigefeld umfasst und
- die Bildpunktwerte des grafischen Elements abhängig von dem Datensatz und dem dreidimensionalen Modell derart ermittelt und auf dem Anzeigefeld angezeigt werden, dass das grafische Element von einem Betrachter des Anzeigefelds aus einer vorgegebenen Betrachtungsposition heraus mit einem direkten Bezug zu der realen Umgebung des Fahrzeugs wahrgenommen wird.

4. Bildermittlungseinheit (5), die signaltechnisch koppelbar ist mit einer optischen Anzeigevorrichtung des Fahrzeugs und die ausgebildet ist,
- einen vorgegebenen Datensatz zu empfangen, der abhängig von einer vorgegebenen Navigationsinformation ermittelt wird und der eine vorgegebene Metadatenstruktur aufweist, die ein Feld für eine Fahraktion und ein Feld für eine Distanz aufweist, wobei die Fahraktion und die Distanz textuell beschrieben sind, und der über eine vorgegebene Kommunikationsschnittstelle (4) übertragen wird,
- abhängig von dem empfangenen Datensatz Bildpunktwerte für zumindest einen Teil von Bildpunkten eines digitalen Bildes und/oder eines grafischen Elements zu ermitteln
- ein Signalisierungssignal zu ermitteln zum Signalisieren der Bildpunktwerte der Bildpunkte mittels der optischen Anzeigevorrichtung,
und **gekennzeichnet durch**:
- abhängig von vorgegebenen Streckendaten und/oder vorgegebenen Umfelddaten ein dreidimensionales Modell für eine vorgegebene Umgebung des Fahrzeugs zu ermitteln,
- die Bildpunktwerte für den zumindest einen Teil der Bildpunkte des digitalen Bildes und/oder des grafischen Elements abhängig dem dreidimensionalen Modell zu ermitteln.

5. Bildermittlungseinheit (5) nach Anspruch 4,
wobei die optische Anzeigevorrichtung ein Head-up-Display (10) mit einem vorgegebenen Anzeigefeld umfasst und die Bildermittlungseinheit (5) ausgebildet ist,
- die Bildpunktwerte des grafischen Elements abhängig von dem Datensatz und dem dreidimensionalen Modell derart zu ermitteln und auf dem vorgegebenen Anzeigefeld des Head-up-Displays (10) zur Anzeige zu bringen, dass das grafische Element von einem Betrachter des Anzeigefelds aus einer vorgegebenen Betrachtungsposition heraus mit einem direkten Bezug zu der realen Umgebung des Fahrzeugs wahrgenommen wird.

6. Anzeigesystem (1) für ein Fahrzeug aufweisend:
- eine Datenermittlungseinheit (3), die ausgebildet ist
- -einen Datensatz zu ermitteln abhängig von einer vorgegebenen Navigationsinformation, wobei der Datensatz eine Metadatenstruktur aufweist, die ein Feld für eine Fahraktion und ein Feld für eine Distanz aufweist, wobei die Fahraktion und die Distanz textuell beschrieben sind und
- - den Datensatz über eine vorgegebene Kommunikationsschnittstelle (4) zu senden,
- eine Bildermittlungseinheit (5) Anspruch 4 oder 5,
- eine vorgegebene Kommunikationsschnittstelle (4), die die Datenermittlungseinheit (3) und die Bildermittlungseinheit (5) signaltechnisch koppelt, und
- zumindest eine optische Anzeigevorrichtung, die signaltechnisch gekoppelt ist mit der Bildermittlungseinheit (5) und die ausgebildet ist, von der Bildermittlungseinheit (5) ermitteltes Signalisierungssignal zu empfangen und zu signalisieren.

7. Anzeigesystem (1)nach Anspruch 6, bei dem die optische Anzeigevorrichtung signaltechnisch mit der Bildermittlungseinheit (5) über eine vorgegebene Multimedia-Schnittstelle (9) gekoppelt ist.

## Claims

1. Method for operating an optical display apparatus of a vehicle, in which
- a data set is ascertained in dependence on prescribed navigation information, wherein the data set has a prescribed metadata structure having a field for a driving action and a field for a distance, with the driving action and the distance being described in the form of text,
- the data set is transmitted via a prescribed communications interface (4),
- image point values for at least one portion of image points of a digital image and/or of a graphical element are ascertained in dependence on the data set received via the communications interface (4),
- a signalling signal is ascertained for signalling the image point values of the image points by means of the optical display apparatus,
and **characterized by**:
- ascertaining a three-dimensional model for a prescribed environment of the vehicle in dependence on prescribed distance data and/or prescribed vicinity data,
- ascertaining the image point values for the at least one portion of the image points of the digital image and/or the graphical element in dependence on the three-dimensional model.

2. Method according to Claim 1, in which the navigation information comprises a driving instruction for a vehicle user.

3. Method according to Claim 1 or 2,
in which
- the optical display apparatus comprises a head-up display (10) having a prescribed display field and
- the image point values of the graphical element are ascertained in dependence on the data set and the three-dimensional model, and are displayed on the display field, such that the graphical element is perceived by a viewer of the display field from a prescribed viewing position with a direct reference to the real environment of the vehicle.

4. Image ascertainment unit (5), which is able to be coupled to an optical display apparatus of the vehicle for the transmission of signals and is configured
- to receive a prescribed data set that is ascertained in dependence on prescribed navigation information and has a prescribed metadata structure having a field for a driving action and a field for a distance, with the driving action and the distance being described in the form of text, and that is transmitted via a prescribed communications interface (4),
- to ascertain image point values for at least one portion of image points of a digital image and/or of a graphical element in dependence on the received data set,
- to ascertain a signalling signal for signalling the image point values of the image points by means of the optical display apparatus,
and **characterized by**:
- ascertaining a three-dimensional model for a prescribed environment of the vehicle in dependence on prescribed distance data and/or prescribed vicinity data,
- ascertaining the image point values for the at least one portion of the image points of the digital image and/or of the graphical element in dependence on the three-dimensional model.

5. Image ascertainment unit (5) according to Claim 4, wherein the optical display apparatus comprises a head-up display (10) with a prescribed display field and the image ascertainment unit (5) is configured
- to ascertain the image point values of the graphical element in dependence on the data set and the three-dimensional model and to cause them to be displayed on the prescribed display field of the head-up display (10) such that the graphical element is perceived by a viewer of the display field from a prescribed viewing position with a direct reference to the real environment of the vehicle.

6. Display system (1) for a vehicle, having:
- a data ascertainment unit (3), which is configured
- - to ascertain a data set in dependence on prescribed navigation information, wherein the data set has a metadata structure having a field for a driving action and a field for a distance, with the driving action and the distance being described in the form of text, and
- - to transmit the data set via a prescribed communications interface (4),
- an image ascertainment unit (5) according to Claim 4 or 5,
- a prescribed communications interface (4), which couples the data ascertainment unit (3) and the image ascertainment unit (5) for the transmission of signals, and
- at least one optical display apparatus, which is coupled to the image ascertainment unit (5) for the transmission of signals and is configured to receive and to signal a signalling signal ascertained by the image ascertainment unit (5).

7. Display system (1) according to Claim 6,
in which the optical display apparatus is coupled to the image ascertainment unit (5) via a prescribed multimedia interface (9) for the transmission of signals.

## Revendications

1. Procédé de fonctionnement d'un dispositif d'affichage optique d'un véhicule, procédé dans lequel
- un ensemble de données est déterminé en fonction d'une information de navigation spécifiée, l'ensemble de données ayant une structure de métadonnées spécifiée qui comporte une zone destinée à une action de conduite et une zone destinée à une distance, l'action de conduite et la distance étant décrites sous forme de texte,
- l'ensemble de données est transmis par le biais d'une interface de communication spécifiée (4),
- des valeurs de pixels d'au moins une partie des pixels d'une image numérique et/ou d'un élément graphique sont déterminées en fonction de l'ensemble de données reçu par le biais de l'interface de communication (4),
- un signal de signalisation est déterminé pour signaler les valeurs des pixels au moyen du dispositif d'affichage optique,
et **caractérisé en ce que** :
- un modèle tridimensionnel d'un environnement spécifié du véhicule est déterminé en fonction de données d'itinéraire spécifiées et/ou de données d'environnement spécifiées,
- les valeurs de pixels d'au moins une partie des pixels de l'image numérique et/ou de l'élément graphique sont déterminées en fonction du modèle tridimensionnel.

2. Procédé selon la revendication 1,
dans lequel l'information de navigation inclut une instruction de conduite destinée à un utilisateur de véhicule.

3. Procédé selon la revendication 1 ou 2, dans lequel
- le dispositif d'affichage optique comprend un affichage tête haute (10) pourvu d'une zone d'affichage spécifiée et
- les valeurs de pixels de l'élément graphique sont déterminées et affichées sur la zone d'affichage en fonction de l'ensemble de données et du modèle tridimensionnel de telle sorte que l'élément graphique soit perçu par un observateur de la zone d'affichage depuis une position d'observation spécifiée avec une référence directe à l'environnement réel du véhicule.

4. Unité de détection d'image (5) qui peut être couplée par une technique de signal à un dispositif d'affichage optique du véhicule et qui est conçue pour
- recevoir un ensemble de données spécifié qui est déterminé en fonction d'une information de navigation spécifiée et qui comporte une structure de métadonnées spécifiée qui comporte une zone destinée à une action de conduite et une zone destinée à une distance, l'action de conduite et la distance étant décrites sous forme de texte, et qui est transmis par le biais d'une interface de communication spécifiée (4),
- déterminer des valeurs de pixels d'au moins une partie des pixels d'une image numérique et/ou d'un élément graphique en fonction de l'ensemble de données reçu,
- déterminer un signal de signalisation destiné à signaler les valeurs des pixels au moyen du dispositif d'affichage optique,
et **caractérisée en ce que** :
- un modèle tridimensionnel d'un environnement spécifié du véhicule est déterminé en fonction de données d'itinéraire spécifiées et/ou de données d'environnement spécifiées,
- les valeurs de pixels d'au moins une partie des pixels de l'image numérique et/ou de l'élément graphique sont déterminées en fonction du modèle tridimensionnel.

5. Unité de détection d'image (5) selon la revendication 4, le dispositif d'affichage optique comprenant un affichage tête haute (10) pourvu d'une zone d'affichage spécifiée et l'unité de détection d'image (5) étant conçue pour
- déterminer les valeurs de pixels de l'élément graphique en fonction de l'ensemble de données et du modèle tridimensionnel et pour les afficher sur la zone d'affichage spécifiée de l'affichage tête haute (10) de manière à ce que l'élément graphique puisse être perçu par un observateur de la zone d'affichage depuis une position d'observation spécifiée avec une référence directe à l'environnement réel du véhicule.

6. Système d'affichage (1) destiné à un véhicule, ledit système comportant :
- une unité de détermination de données (3) qui est conçue pour
- -déterminer un ensemble de données en fonction d'une information de navigation spécifiée, l'ensemble de données ayant une structure de métadonnées qui comporte une zone destinée à une action de conduite et une zone destinée à une distance, l'action de conduite et la distance étant décrites sous forme de texte, et
- - envoyer l'ensemble de données par le biais d'une interface de communication spécifiée (4),
- une unité de détection d'image (5) selon la revendication 4 ou 5,
- une interface de communication spécifiée (4) qui couple l'unité de détermination de données (3) et l'unité de détermination d'image (5) par une technique de signal, et
- au moins un dispositif d'affichage optique qui est couplé par une technique de signal à l'unité de détermination d'image (5) et qui est conçu pour recevoir et signaler le signal de signalisation déterminé par l'unité de détermination d'image (5).

7. Système d'affichage (1) selon la revendication 6, dans lequel le dispositif d'affichage optique est couplé par une technique de signal à l'unité de détermination d'image (5) par le biais d'une interface multimédia spécifiée (9).
